# EUROPEAN PATENT SPECIFICATION

(11) **EP 2 080 581 B1**
(45) Date of publication and mention of the grant of the patent: **04.01.2012**
(21) Application number: 07828232.4
(22) Date of filing: 12.09.2007
(51) Int. Cl.: B23Q 1/70, B23B 19/02, B23Q 1/54

(54) **MACHINING HEAD FOR MACHINE TOOL**
BEARBEITUNGSKOPF FÜR WERKZEUGMASCHINE
TÊTE D`USINAGE POUR MACHINE-OUTIL

(30) Priority: 14.09.2006 JP 2006249005; 31.08.2007 JP 2007224957
(43) Date of publication of application: 22.07.2009
(73) Proprietor: Tsudakoma Kogyo Kabushiki Kaisha, Kanazawa-shi, Ishikawa 921-8650 (JP)
(72) Inventor: TATSUDA, Yoshinori, Kanazawa-shi Ishikawa 921-8650 (JP); ENAMI, Haruyuki, Kanazawa-shi Ishikawa 921-8650 (JP)
(74) Representative: Samson & Partner
(86) International application number: PCT/JP2007/067715
(87) International publication number: WO 2008/032731

(56) References cited:
- EP-A2- 0 504 691
- WO-A1-01/94070
- DE-U1- 29 623 999
- JP-A- 03 178 709
- JP-A- 09 300 149
- JP-A- 61 288 907
- JP-A- 2004 520 944

## Description

### Technical Field

The present invention relates to machining heads for machine tools, and particularly, to a machining head which is used in a compound processing machine (machine tool), such as a five-axis processing machine (that is, a processing machine capable of controlling five axes simultaneously) and a multi-face processing machine.

### Background Art

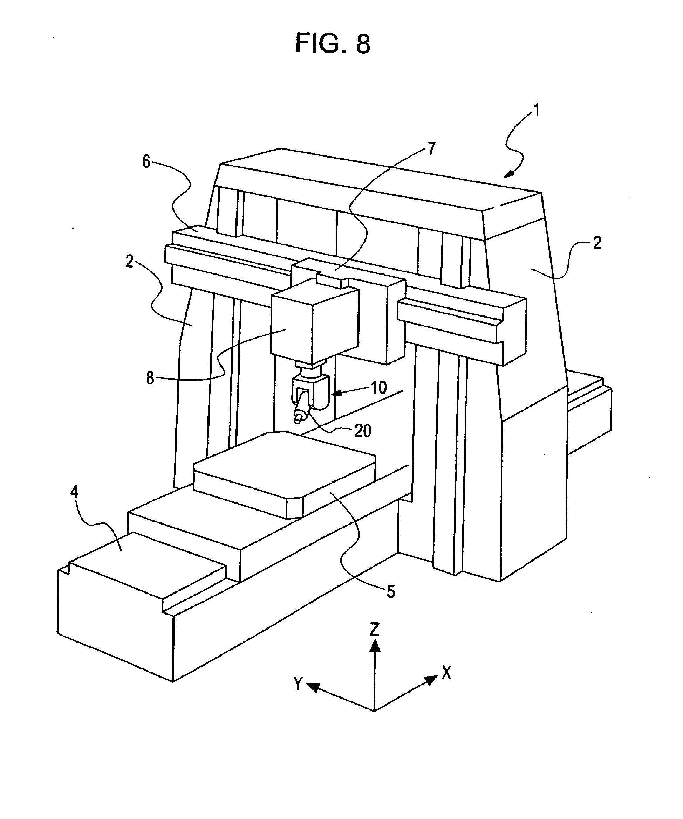

Fig. 8 illustrates a double-housing machine tool (machining center) 1 as an example of a compound processing machine. The double-housing machine tool 1 includes left and right columns 2, 2 attached to a bed 4, a cross rail 6 movable vertically (in Z-axis direction) on the columns 2, 2, a saddle 7 movable horizontally (in Y-axis direction) on the cross rail 6, a ram 8 movable in the Z-axis direction on the saddle 7, and a table 5 movable in the front-back direction (in X-axis direction) on the bed 4. Furthermore, the ram 8 has a machining head 10 attached thereto, which includes a spindle unit 20 equipped with a spindle to which a tool can be attached.

When machining a workpiece, the double-housing machine tool 1 moves the table 5, the cross rail 6, the saddle 7, and the ram 8, and the machining head 10 indexes the angular position (rotational position) of the spindle unit 20 in accordance with numerical control based on a preliminarily set program. Accordingly, in the machine tool, the tool can be set at appropriate angles for machining various surfaces of the workpiece so that the workpiece can be cut into complicated shapes.

In order to achieve this, the machining head has the spindle unit 20 and is equipped with an index mechanism within a support head component for the spindle unit 20. The index mechanism is for indexing the angular position of the spindle unit 20. Patent Document 1, for example, discloses a machining head equipped with a drive motor of a direct-drive type (which will be referred to as a DD motor hereinafter) as means for driving the index mechanism. The DD motor includes a motor stator and a motor rotor that are disposed within a housing of the machining head 10, and the rotor is linked with a support shaft that supports the spindle unit.

Regarding the support head component (operating head component) included in the machining head disclosed in Patent Document 1, the support head component (first support portion) supports the spindle unit (second support portion) with a pair of support shafts (shafts) disposed on opposite sides of the spindle unit.

Specifically, the support head component disclosed in Patent Document 1 has the shape of a fork in which a pair of support segments (arms) is disposed on opposite sides of the spindle unit. The support shafts are supported in a rotatable fashion within the support segments. Each of the support segments has a built-in DD motor that is linked with the corresponding support shaft. Each DD motor rotates the corresponding support shaft so that the spindle unit is rotated about an axis line of the support shaft, whereby the spindle unit can be indexed to a desired rotational position (angular position). The terms in parentheses correspond to those used in Patent Document 1.

Although not discussed in Patent Document 1, a machining head used in a machine tool is generally provided with a bearing for rotatably supporting the support shafts and a clamp mechanism for maintaining the indexed angular position of the spindle unit, which are disposed within the support head component. There are also cases where a rotary joint for supplying machining fluid to the spindle unit is disposed within the support head component.

In the machining head used in the machine tool described above, there are cases where the spindle unit needs to be detached from the support head component for maintenance purposes, such as adjustment and repair. However, in a typical machining head, there are often cases where the spindle unit cannot be readily detached from the support head component by simply unscrewing screw members that maintain the fixed state between the support shafts and the spindle unit. The following is one of the reasons for such a difficulty in the detachment of the spindle unit.

Specifically, in a support head component of a typical machining head, one of the spindle unit and the pair of support shafts is provided with holes (or recesses), and the other is provided with protrusions that are engageable with the holes. The holes and protrusions are provided for the purpose of facilitating the positioning of the spindle unit relative to the support segments when the spindle unit is being attached to the support segments. The hole-and-protrusion engagement technique is generally applied for the positioning between the support shafts and the spindle unit. Consequently, in a support head component that supports the spindle unit by holding the spindle unit between the pair of support shafts disposed on opposite sides thereof, even if the screw members are unscrewed to release the fixed state between the support shafts and the spindle unit, the spindle unit cannot be detached from the support head component unless one of the support shafts is slid or moved in its axial direction to disengage the support shaft from the spindle unit.

Accordingly, in addition to unscrewing the screw members to release the fixed state between the support shafts and the spindle unit, the process for detaching the spindle unit from the aforementioned support head component requires sliding one support shaft in its axial direction to disengage the support shaft from the spindle unit. However, with the support head component of the known art, the process for sliding the support shaft in its axial direction has to be implemented in a manner such that the elements contained within the support head component, including the bearing and the like, are detached in a certain order starting from the elements located farthest from the spindle unit. This results in extremely bad workability.
Patent Document 1: Japanese Unexamined Patent Application Publication No. 2003-48135
Further, from document DE 296 23 999 U1 a machining head for a machine tool according to the preamble of claim 1 is known.

### Disclosure of Invention

### Problems to be Solved by the Invention

Accordingly, it is an object of the present invention to provide a machining head for a machine tool, in which a support head component that supports a spindle unit is given a configuration that allows for easy maintenance.

### Means for Solving the Problems

To achieve the above-described object, the present invention is directed to a machining head for a machine tool, which includes a spindle unit including a spindle to which a tool is attachable; and a support head component that supports the spindle unit, the support head component including an index mechanism and a clamp mechanism, the index mechanism rotating the spindle unit about an axis line extending perpendicular to a rotary axis line of the spindle in order to index an angular position of the spindle unit, the clamp mechanism maintaining the indexed angular position of the spindle unit.

The machining head according to the present invention is characterized in that the support head component further includes first and second support segments containing respective support shafts, the support shafts being disposed opposite to each other across the spindle unit such that shaft centers of the support shafts are aligned with the axis line extending perpendicular to the rotary axis line of the spindle. Each of the first and second support segments has a housing having a bearing member therein, the bearing member being fixed to the housing and rotatably supporting the corresponding support shaft through a bearing. The index mechanism includes a drive motor as driving means provided in at least one of the first and second support segments, the drive motor including a motor rotor and a motor stator that surround the corresponding support shaft and are disposed coaxially with the support shaft.

Further the bearing member has a base section or a flange portion and a cylindrical portion extending in the axis direction from the base section or the flange portion, the bearing member being assembled to the housing by a plurality of screw members screwed into the bearing member in the axis A direction from a side of the base section or the flange portion, the support shaft and the bearing member are combined together in an integrally movable manner in the axis direction through the bearing, the support shaft and the spindle unit are fixed by a plurality of screw members, each housing of the first and second support segments has a through hole in which the support shaft and cylindrical portions of and the bearing member are arranged, and the cylindrical portions of the bearing member at the side opposite to the spindle unit, and the support shaft in each support segment is supported by the corresponding bearing member in a manner such that the support shaft becomes integrally movable together with the bearing member in the axial direction of the support shaft by releasing a fixed state by the screw members between the support shaft and the spindle unit and the fixed state by the screw members between the bearing member and the corresponding housing.

Furthermore, in the present invention, the drive motor may be fixed to the corresponding support shaft and the corresponding bearing member such that the drive motor becomes integrally movable with the support shaft and the bearing member when the fixed states are released. Furthermore, the clamp mechanism may be fixed to the bearing member in at least one of the first and second support segments such that the clamp mechanism becomes integrally movable with the corresponding support shaft and the bearing member when the fixed states are released. Furthermore, the bearing may be disposed within a range occupied by the drive motor in the axial direction of the corresponding support shaft. Furthermore, the bearing member may be attached to the housing with a spacer provided therebetween.

### Advantages

According to the machining head for the machine tool of the present invention, when the spindle unit is to be detached from the support head component for maintenance purposes, such as repair, the detachment process only requires unscrewing screw members to release the fixed state between the support shafts and the spindle unit and releasing the fixed state between the housings and the bearing members rotatably supporting the support shafts through the bearings. With this simple detachment process, the support shafts become movable (slidable) in the axial direction thereof. Accordingly, the detachment process for the spindle unit is simplified, thereby facilitating the overall process required for maintenance.

Furthermore, the drive motor and the clamp mechanism disposed within the corresponding support segment as required elements are fixed to the corresponding support shaft and/or the corresponding bearing member, and become integrally movable upon movement of the support shaft and the bearing member. Thus, the drive motor and/or the clamp mechanism can be detached from the support segment while they are kept combined with the support shaft and the bearing member as a single unit. Consequently, when the elements contained in each support segment require maintenance, such as an adjustment, the detachment process of the elements and the reattachment process thereof after maintenance can be readily implemented. In addition, since the detachment process is implemented while the positional relationships among the elements are maintained due to the combined state, the adjustment among the elements can be readily implemented.

### Brief Description of Drawings

[Fig. 1] Fig. 1 is a front partially-cutaway view of a support head component included in a machining head according to an embodiment of the present invention.
[Fig. 2] Fig. 2 includes side views of the support head component in the machining head according to the embodiment.
[Fig. 3] Fig. 3 is a front partially-cutaway view of the machining head according to the embodiment.
[Fig. 4] Fig. 4 is an exploded view showing a portion of the support head component in the machining head according to the embodiment.
[Fig. 5] Fig. 5 is an exploded view showing another portion of the support head component in the machining head according to the embodiment.
[Fig. 6] Fig. 5 is an exploded view showing another portion of the support head component in the machining head according to the embodiment.
[Fig. 7] Fig. 7 is a front partially-cutaway view of a support head component included in a machining head according to another embodiment of the present invention.
[Fig. 8] Fig. 8 is a perspective view showing an example of a machine tool to which the machining head according to the present invention is applied.

### Reference Numerals

1 machine tool
10 machining head
20 spindle unit
21 spindle
25 DD motor
25a rotor
25b stator
30 head component (first support head component)
30a, 30b leg segment (support segment)
30c support segment
31a, 31b housing
32, 39 rotary shaft
33 DD motor (drive motor)
33a rotor (motor rotor)
33b stator (motor stator)
34 clamp mechanism
34a clamp sleeve
35 housing part (bearing member)
36 brake member
37, 38 rotary joint
37a, 38a distributor
37b, 38b shaft
39 bearing holder (bearing member)
41, 44 rotation detector
41a, 44a detector head
41b, 44b detector ring
45, 46 bearing
50 second support head component
51 housing
52 rotary shaft
53 DD motor
53a stator
53b rotor
54 clamp sleeve
55 distributor
56 bearing (triple cylindrical roller bearing)
60 support head component
60a, 60b leg segment (support segment)
61 housing
62 rotary shaft
63 DD motor (drive motor)
63a rotor (motor rotor)
63b stator (motor stator)
65 bearing
66 clamp sleeve
67 rotary joint
67a first distributor
67b second distributor
67c shaft
68 rotation detector
70a, 70b spacer member

### Best Modes for Carrying Out the Invention

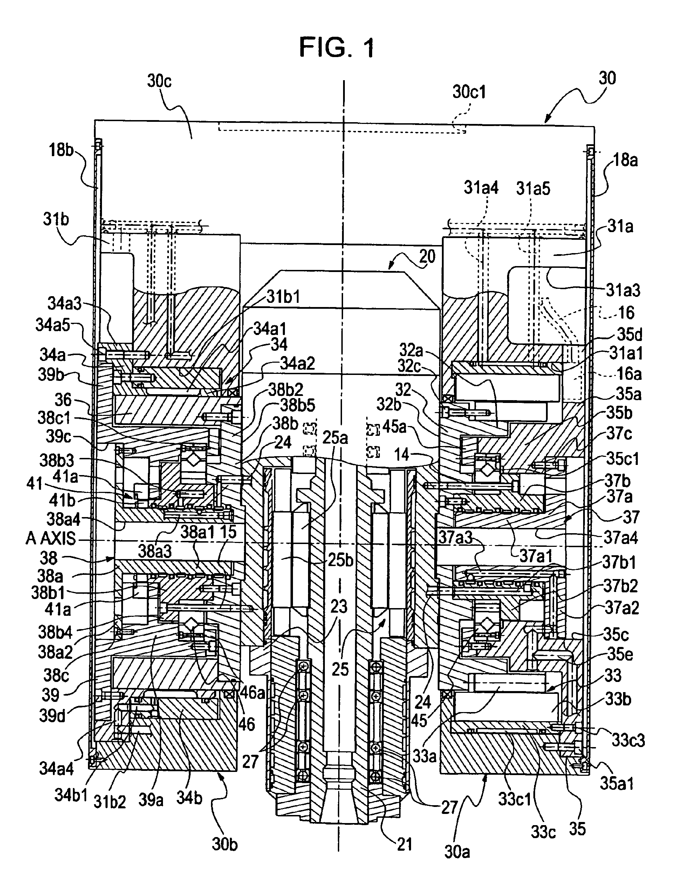

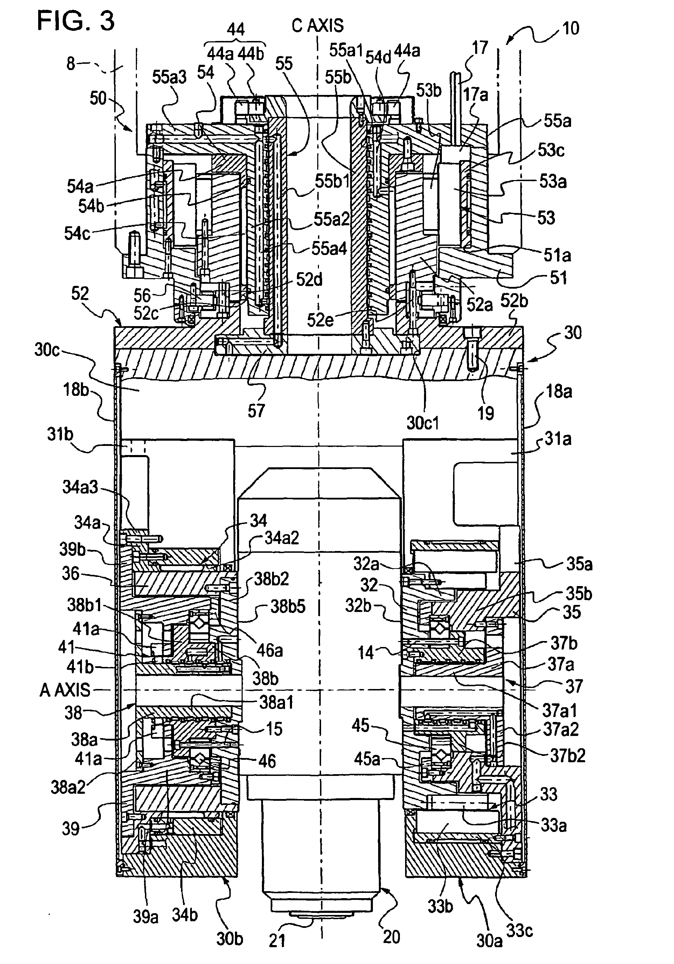

Embodiments of the present invention will now be described with reference to the drawings. Figs. 1 to 5 illustrate an embodiment of the present invention. A machining head 10 includes a spindle unit 20 having a spindle 21 to which a tool can be attached, a first support head component 30 (corresponding to support head component according to the present invention) that supports the spindle unit 20, and a second support head component 50 that supports the first support head component 30 (Fig. 3).

The spindle unit 20 is a spindle head having a drive motor built therein, and the built-in drive motor 25 rotates the spindle 21 at high speed. A housing 23 of the spindle unit 20 has the spindle 21 extending therethrough and accommodates a drive motor 25 that surrounds the spindle 21. The drive motor 25 includes a rotor 25a fitted around the spindle 21, and a stator 25b facing an outer periphery surface of the rotor 25a. The spindle 21 is rotatably supported by a plurality of bearings 27, such as angular contact bearings, arranged in a front-back direction of the drive motor 25, that is, in the vertical direction in Fig. 1. When an exciting current is supplied to the stator 25b, an excitation force is generated between the rotor 25a and the stator 25b. The rotor 25a rotates in response to the excitation force, whereby the spindle 21 is rotated.

In addition to supporting the spindle unit 20, the first support head component 30 has a function of rotating the spindle unit 20 around an axis line extending perpendicular to a rotary axis line (referred to as an A axis hereinafter) of the spindle 21 in order to index the angular position of the spindle unit 20.

The first support head component 30 has the shape of a fork in which a pair of leg segments 30a, 30b corresponding to first and second support segments of the present invention is joined to a support segment 30c. The spindle unit 20 is supported between the leg segments 30a, 30b. Specifically, the pair of leg segments 30a, 30b respectively contains therein a pair of rotatable support shafts for supporting the spindle unit 20.

In the support head component (first support head component 30) according to the present embodiment, a DD motor 33 (corresponding to drive motor according to the present invention) for rotating the spindle unit 20 is provided only in the leg segment 30a (first support segment) of the two leg segments 30a, 30b. Regarding the pair of support shafts, the support shaft in the leg segment 30a will be referred to as a driving support shaft hereinafter, whereas the support shaft in the leg segment 30b will be referred to as a driven support shaft hereinafter.

The configuration of the leg segment 30a (first support segment) equipped with the DD motor 33 will be described in detail below.

The leg segment 30a has a housing 31a as a main body. The housing 31a accommodates, for example, a rotor (motor rotor) 33a and a stator (motor stator) 33b that constitute the DD motor 33, the driving support shaft that supports the spindle unit 20, a bearing 45 such as a cross roller bearing for rotatably supporting the driving support shaft, and a rotary joint 37 for supplying machining fluid (which will simply be referred to as fluid hereinafter) to the spindle unit 20.

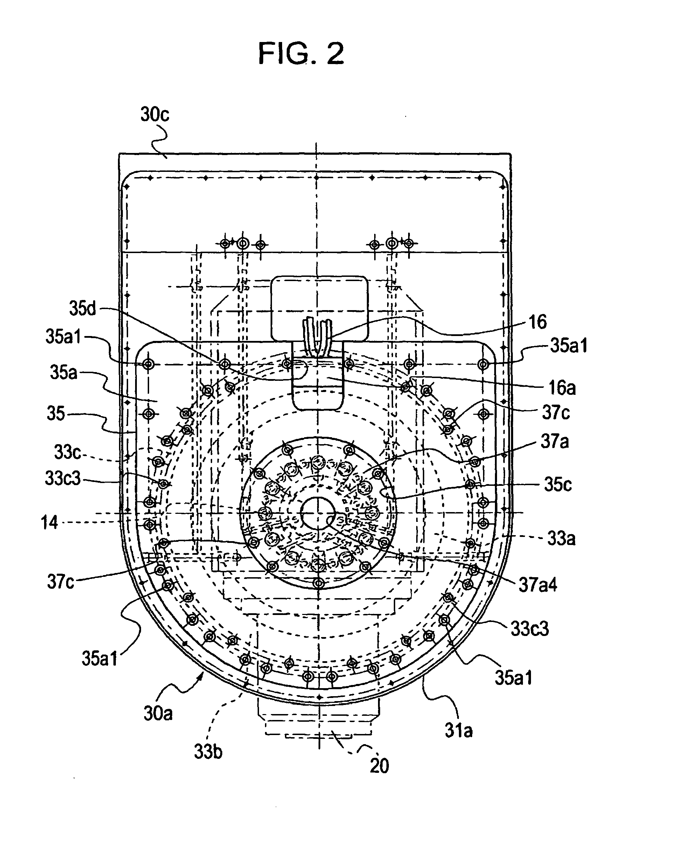

The housing 31a has a through hole 31a1 in which the DD motor 33 and other elements to be described below, such as a rotary shaft, are arranged. The side surface of the housing 31a farthest from the spindle unit has a recess 31a3 through which a fluid-supply pipe and a current-supply cable to be described below extend. A side surface of the leg segment 30a farthest from the spindle unit 20 has a side-surface cover 18a attached thereto. The side-surface cover 18a covers the recess 31a3. Fig. 2 shows a state where the side-surface cover 18a is removed.

The side surface of the housing 31a farthest from the spindle unit has a housing part 35 attached thereto, which is independent of the housing 31a. The housing part 35 integrally has a flat base section 35a and a cylindrical portion 35b projecting from the base section 35a towards the spindle unit in the A-axis direction. An end of the cylindrical portion 35b proximate to the spindle unit is given a smaller diameter than that of the end thereof proximate to the base section 35a.

The housing part 35 has a through hole 35c for receiving the rotary joint 37. The through hole 35c is given a large inner diameter at an end thereof proximate to the spindle unit. Thus, a shoulder portion 35c1 is formed in the through hole 35c. The base section 35a of the housing part 35 has a cut section 35d for allowing, for example, a cable for supplying exciting current to the DD motor 33 to be disposed therein. The housing part 35 is combined with the housing 31a by means of a plurality of screw members 35a1 screwed to the base section 35a.

The rotary joint 37 includes a distributor 37a fixed to the housing part 35 and a shaft 37b rotatably fitted around an outer periphery surface of the cylindrical portion 37a1 of the distributor 37a.

In a state where the distributor 37a extends through the through hole 35c of the housing part 35, a flange portion 37a2 of the distributor 37a is attached to the cylindrical portion 35b of the housing part 35 by means of a plurality of screw members 37c arranged in the circumferential direction. The center of the distributor 37a is provided with a through hole 37a4 through which, for example, cables (not shown) can extend toward the spindle unit 20.

The distributor 37a has a plurality of fluid channels 37a3 that are arranged at different positions in the circumferential direction. The fluid channels 37a3 are provided for supplying or discharging fluid. On the other hand, the shaft 37b has a plurality of fluid channels 37b1 that correspond to the fluid channels 37a3 of the distributor 37a. In Fig. 1, only one of the fluid channels 37a3 and one of the fluid channels 37b1 are representatively shown.

The fluid channels 37a3 and the fluid channels 37b1 corresponding thereto communicate with each other through annular grooves extending around an engagement surface between the distributor 37a and the shaft 37b. This communication state is maintained even upon rotation of the shaft 37b. The distributor 37a and the shaft 37b have a seal member interposed therebetween for attaining a sealed state between the annular grooves, thereby maintaining fluid-tightness among the fluid channels communicating with each other.

Each of the fluid channels 37b1 in the shaft 37b communicates with a fluid supply or discharge port (supply-discharge port) 24 of the spindle unit 20. The fluid channels 37a3 of the distributor 37a respectively communicate with fluid channels 35e provided in the housing part 35 in correspondence with the fluid channels 37a3. The fluid channels 35e of the housing part 35 are connected with a fluid discharge pipe (not shown) extending from the outside.

According to these fluid channels extending through the rotary joint 37, fluid supplied from the outside is supplied to the spindle unit 20 via the fluid channels 35e, 37a3, 37b1 of the housing part 35 and the rotary joint 37. When the fluid is subject to circulation, the fluid circulating within the spindle unit 20 is discharged to the outside via the fluid channels 35e, 37a3, 37b1. The fluid to be supplied to the spindle unit 20 may be, for example, cooling oil for cooling the drive motor 25 or the spindle 21 of the spindle unit 20 that rotates at high speed, sealing air for preventing cutting chips and powder from entering the spindle unit 20 (i.e. the rotating portion of the spindle 21), and cooling water for cooling the rotating tool and the like used during the machining process.

The DD motor 33 is constituted by the stator 33b disposed non-rotatably with respect to the housing 31a and by the rotor 33a disposed facing an inner periphery surface of the stator 33b. In other words, the DD motor 33 is an inner-rotor-type motor.

The stator 33b is fitted within an inner periphery surface of a stator sleeve 33c fixed to the housing part 35 by means of a plurality of screw members 33c3 arranged in the circumferential direction. The stator sleeve 33c has an annular groove 33c1 extending around an outer periphery surface thereof. On the other hand, the housing 31a has a fluid supply path 31a4 and a fluid discharge path 31a5 that communicate with the annular groove 33c1. A cooling fluid, such as oil, for cooling the DD motor 33 is supplied from the fluid supply path 31a4 towards the annular groove 33c1 so as to reduce heat generated by the DD motor 33 due to the rotation of the rotor 33a. Although not shown specifically in the drawings, the annular groove 33c1 has a helical shape so that when fluid is supplied from the fluid supply path 31a4, the fluid circulates the annular groove 33c1 so as to be discharged from the fluid discharge path 31a5.

The outer periphery surface of the rotor 33a faces the inner periphery surface of the stator 33b, and the rotor 33a is fitted around a rotary shaft 32 disposed rotatably within the housing 31a. Moreover, the rotor 33a is attached to the rotary shaft 32 in a relatively non-rotatable fashion by means of a plurality of screw members 32c arranged in the circumferential direction.

The rotary shaft 32 is disposed concentrically with the shaft 37b of the rotary joint 37 with respect to the rotary axis line thereof. Moreover, the rotary shaft 32 is attached to the shaft 37b by means of a plurality of screw members arranged in the circumferential direction. The rotary shaft 32 has a cylindrical portion 32a that surrounds a small-diameter section provided at an end proximate to the spindle unit of the cylindrical portion 35b of the housing part 35 in the state where the rotary shaft 32 is attached to the shaft 37b. The rotor 33a of the DD motor 33 is fitted around the outer periphery surface of the cylindrical portion 32a.

An end surface 32b of the rotary shaft 32 proximate to the spindle unit has the spindle unit 20 fixed thereto by means of a plurality of screw members 14 arranged in the circumferential direction. In other words, the spindle unit 20 is fixed to the end surface 32b of the rotary shaft 32 with the screw members 14, and is supported by the rotary shaft 32. Consequently, in the leg segment 30a, the rotary shaft 32 and the shaft 37b of the rotary joint 37 rotating together with the rotary shaft 32 constitute the driving support shaft for the spindle unit 20.

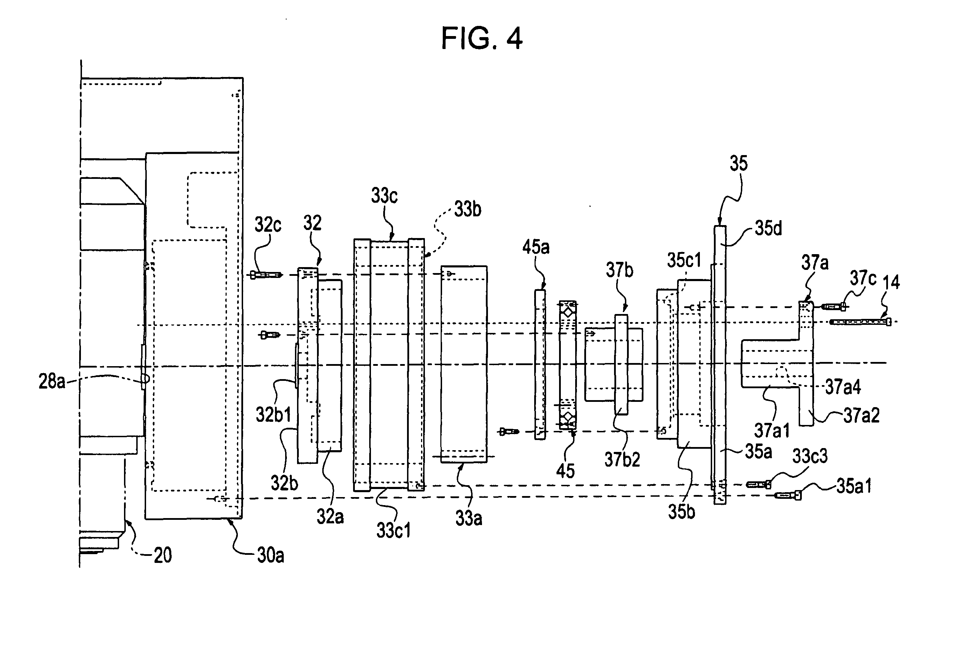

The end surface 32b of the rotary shaft 32 is provided with a cylindrical projection 32b1 whose center is aligned with the rotary axis line of the rotary shaft 32. On the other hand, the spindle unit 20 has a depression 28a engageable with the projection 32b1 at a position corresponding to the projection 32b1 (Fig. 4). The projection 32b1 of the rotary shaft 32 and the depression 28a in the spindle unit 20 are engaged with each other, whereby the spindle unit 20 is properly positioned with respect to the rotary shaft 32 (driving support shaft).

In a state where the side-surface cover 18a is removed, the screw members 14 provided for securing the spindle unit 20 are manipulatable from the opposite side of the spindle unit through the holes provided in the flange portion 37a2 of the distributor 37a of the rotary joint 37.

The driving support shaft in the leg segment 30a is rotatably supported in the housing 31a by means of the bearing 45 interposed between the driving support shaft and the cylindrical portion 35b of the housing part 35. Specifically, the driving support shaft is disposed coaxially with the cylindrical portion 35b about the central axis of the cylindrical portion 35b, and the central axis (rotary axis line) of the driving support shaft is aligned with the A axis, which corresponds to the rotary axis line of the spindle unit 20. In the leg segment 30a shown in the drawings, the housing part 35 defines the bearing member according to the present invention.

The inner ring of the bearing 45 is fitted around the outer periphery surface of the shaft 37b of the rotary joint 37 constituting a part of the driving support shaft. On the other hand, the outer ring of the bearing 45 is fitted within the through hole 35c in the housing part 35 fixed to the housing 31a.

The side of the bearing 45 proximate to the driving support shaft (i.e. the inner ring) is positionally regulated in the A-axis direction by a large-diameter portion 37b2 of the shaft 37b and an end surface of the rotary shaft 32. On the other hand, at the side of the bearing 45 proximate to the housing part 35 (i.e. the outer ring), a bearing sleeve 45a is attached to an end surface of the cylindrical portion 35b of the housing part 35 proximate to the spindle unit, and the bearing 45 is positionally regulated in the A-axis direction by the bearing sleeve 45a and the shoulder portion 35c1 provided within the through hole 35c. Thus, the bearing 45 is disposed in a in a state such that the bearing 45 is positionally regulated in the A-axis direction with respect to both the driving support shaft (i.e. the shaft 37b of the rotary joint 37 and the rotary shaft 32) and the housing part 35. In other words, the driving support shaft and the bearing member (housing part 35) are combined with the bearing 45 therebetween, such that free movement among these elements in the A-axis direction is prohibited.

As described above, the bearing 45 is interposed between the shaft 37b of the rotary joint 37 and the cylindrical portion 35b of the housing part 35, the shaft 37b and the cylindrical portion 35b being positioned within the cylindrical portion 32a of the rotary shaft 32 around which the DD motor 33 is fitted.

The configuration of the leg segment 30b (second support segment) that supports the spindle unit 20 at a position opposite to that of the leg segment 30a will be described in detail below.

The leg segment 30b has a housing 31b as a main body. The housing 31b has a through hole 31b1 extending in the A-axis direction. Within this through hole 31b1 are fitted, for example, a clamp mechanism 34 for maintaining the angular position of the spindle unit 20, the driven support shaft for supporting the spindle unit 20, a bearing 46 for rotatably supporting the driven support shaft, and a rotary joint 38.

The rotary joint 38 is similar to the rotary joint 37 provided in the leg segment 30a, and includes a distributor 38a combined with a bearing holder 39 fixed to the housing 31b and a shaft 38b rotatably fitted around an outer periphery surface of a cylindrical portion 38a1 of the distributor 38a.

The bearing holder 39 includes a cylindrical portion 39a and a flange portion 39b extending outward radially from an end of the cylindrical portion 39a farthest from the spindle unit. The flange portion 39b of the bearing holder 39 is joined to the housing 31b through a clamp sleeve 34a, which will be described below, by means of a plurality of screw members 39d arranged in the circumferential direction. Furthermore, the center of the bearing holder 39 is provided with a through hole 39c extending in the A-axis direction.

The distributor 38a of the rotary joint 38 is constituted by the cylindrical portion 38a1 and a flange portion 38a2 extending outward radially from an end of the cylindrical portion 38a1 farthest from the spindle unit. The distributor 38a is inserted into the through hole 39c in the bearing holder 39. In this state, the flange portion 38a2 is joined to the bearing holder 39 by means of a plurality of screw members 38c arranged in the circumferential direction. Furthermore, the center of the distributor 38a is provided with a through hole 38a4 extending in the A-axis direction.

The distributor 38a has a plurality of fluid channels 38a3 that are arranged at different positions in the circumferential direction. The shaft 38b has a plurality of fluid channels 38b3 that correspond to the fluid channels 38a3 of the distributor 38a. In Fig. 1, only one of the fluid channels 38a3 and one of the fluid channels 38b3 are representatively shown.

The fluid channels 38a3 and the fluid channels 38b3 corresponding thereto communicate with each other through annular grooves extending around an engagement surface between the distributor 38a and the shaft 38b. This communication state is maintained even upon rotation of the shaft 38b. The distributor 38a and the shaft 38b have seal members interposed therebetween for attaining a sealed state between the annular grooves. Furthermore, the fluid channels 38b3 communicate with the fluid supply or discharge port 24 formed in the spindle unit 20.

In the example shown in the figure, the shaft 38b of the rotary joint 38 is constituted by two members, which are a shaft member 38b1 and a flange member 38b2. The shaft 38b is disposed such that a rotary axis line thereof is aligned with the rotary axis line (= A axis) of the rotary shaft 32 in the leg segment 30a. In other words, the rotary joint 38 is disposed such that the central axis of the distributor 38a is aligned with the A axis, so that the rotary axis line of the shaft 38b is aligned with the A axis. In the leg segment 30b, the shaft 38b corresponds to the rotary shaft 32 in the leg segment 30a.

The shaft member 38b1 of the shaft 38b is disposed within the through hole 39c formed in the cylindrical portion 39a of the bearing holder 39. In this state, the shaft 38b is supported by the bearing holder 39 in a rotatable fashion through the bearing 46. Accordingly, the shaft 38b (shaft member 38b1 and the cylindrical portion 39a of the bearing holder 39 are disposed concentrically with respect to the A axis. The bearing holder 39 defines a bearing member in the leg segment 30b.

The flange member 38b2 of the shaft 38b has an end surface 38b5 at a side thereof proximate to the spindle unit. The end surface 38b5 is parallel to the end surface 32b of the rotary shaft 32 in the leg segment 30a. The end surface 38b5 has the spindle unit 20 fixed thereto by means of a plurality of screw members 15 arranged in the circumferential direction. Consequently, in the leg segment 30b, the shaft 38b of the rotary joint 38 functions as the driven support shaft for the spindle unit 20. A cylindrical brake member 36 is fixed to an outer peripheral portion of the flange member 38b2 of the shaft 38b, and the brake member 36 also rotates together with the shaft 38b. Accordingly, the brake member 36 is also part of the driven support shaft.

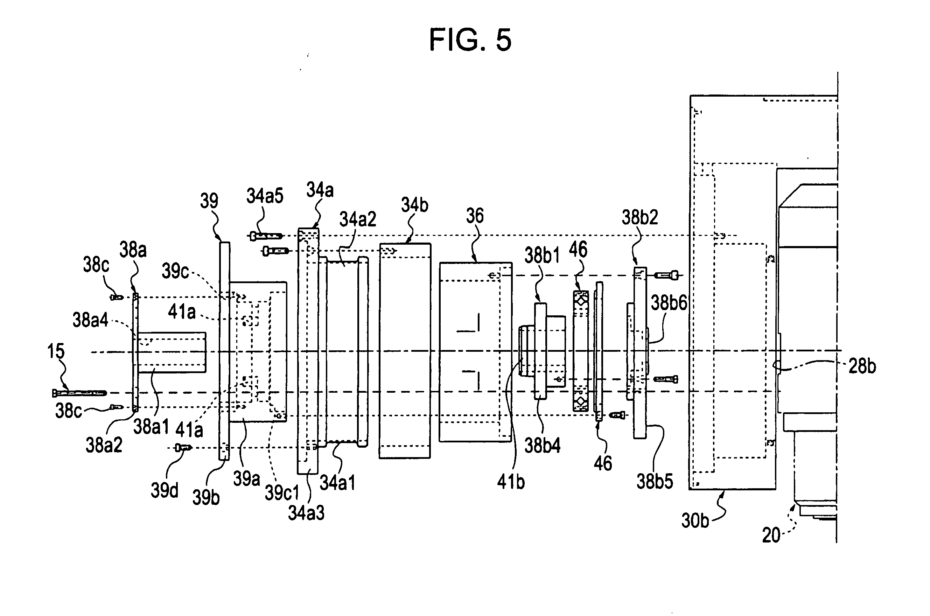

The end surface 38b5 of the shaft 38b (flange member 38b2) is provided with a cylindrical projection 38b6 whose center is aligned with the rotary axis line of the shaft 38b. On the other hand, the spindle unit 20 has a depression 28b engageable with the projection 38b6 at a position corresponding to the projection 38b6 (Fig. 5). The projection 38b6 of the shaft 38b and the depression 28b in the spindle unit 20 are engaged with each other, whereby the spindle unit 20 is properly positioned with respect to the shaft 38b (driven support shaft).

In a state where the side-surface cover 18b is removed, the screw members 15 for securing the spindle unit 20 can be manipulated from the opposite side of the spindle unit 20 through holes provided in the flange portion 38a2 of the distributor 38a of the rotary joint 38.

As described above, the bearing 46 is interposed between the shaft 38b and the cylindrical portion 39a of the bearing holder (bearing member) 39. Specifically, the bearing 46 has its inner ring fitted around the outer periphery surface of the shaft member 38b1 at a side proximate to the shaft 38b. This inner-ring side of the bearing 46 is thus positionally regulated in the A-axis direction by a large-diameter portion 38b4 of the shaft member 38b1 and by an end surface of the flange member 38b2. On the other hand, the bearing 46 has its outer ring fitted within the through hole 39c formed in the cylindrical portion 39a of the bearing holder 39 at a side proximate to the distributor 38a. This outer-ring side of the bearing 46 is thus positionally regulated in the A-axis direction by a shoulder portion 39c1, defined by a large-diameter portion of the through hole 39c, and by a bearing sleeve 46a joined to an end surface of the cylindrical portion 39c proximate to the spindle unit.

Accordingly, the bearing 46 is disposed in a in a state such that the bearing 46 is positionally regulated in the A-axis direction with respect to both the shaft 38b (driven support shaft) and the bearing holder 70 (bearing member). In other words, the driven support shaft and the bearing member (bearing holder 70) are combined with the bearing 46 therebetween, such that free movement among these elements in the A-axis direction is prohibited.

The clamp mechanism 34 for maintaining the rotational position (angular position) of the spindle unit 20 is mainly constituted by a clamp sleeve 34a. The clamp sleeve 34a includes a cylindrical portion 34a2 having an annular groove 34a1 that forms a pressure chamber, and a flange portion 34a3 extending outward radially from an end of the cylindrical portion 34a2 farthest from the spindle unit. The cylindrical portion 34a2 surrounds the brake member 36, which is rotatable together with the shaft 38b of the rotary joint 38, in a manner such that the cylindrical portion 34a2 permits rotation of the shaft 38b.

The cylindrical portion 34a2 of the clamp sleeve 34a and the housing 31b have an annular pressure-receiving member 34b interposed therebetween. In detail, the pressure-receiving member 34b is fitted within the through hole 31b1 of the housing 31b. The cylindrical portion 34a2 of the clamp sleeve 34 is fitted within the inner periphery surface of the pressure-receiving member 34b. The clamp sleeve 34a is fixed to the housing 31b by means of a plurality of screw members 34a5 screwed to the flange portion 34a3 from a side farthest from the spindle unit. Furthermore, the pressure-receiving member 34b is fixed to the flange portion 34a3.

The cylindrical portion 34a2 of the clamp sleeve 34a has the annular groove 34a1 which is open towards the pressure-receiving member 34b. The annular groove 34a1 and the inner periphery surface of the pressure-receiving member 34b together form a pressure chamber. This pressure chamber communicates with a fluid channel 34b1 provided in the pressure-receiving member 34b. The fluid channel 34b1 communicates with a fluid channel 31b2 in the housing 31b through a fluid channel 34a4 provided in the flange portion 34a3 of the clamp sleeve 34a.

In the clamp mechanism 34, when pressure fluid, such as pressure oil, is supplied to the pressure chamber through these fluid channels, a thin-walled section in the cylindrical portion 34a2 of the clamp sleeve 34a, which corresponds to the annular groove 34a1, becomes deformed inward in the radial direction of the cylindrical portion 34a2. As a result, a clamping force acts on the brake member 36 in the radially-inward direction, whereby a state (clamped state) is attained in which the brake member 36 and the shaft 38b (driven support shaft) combined therewith are prevented from rotating. When the supply of pressure fluid to the pressure chamber is stopped, the thin-walled section of the cylindrical portion 34a2 becomes released from the deformed state. This eliminates the clamping force acting on the brake member 36, thereby releasing the clamped state.

In the example shown in the figure, the leg segment 30b also contains a rotation detector 41 for detecting the rotational angle of the shaft 38b (i.e. the angular position of the spindle unit 20).

A disc-shaped supporter is provided in the through hole 39c in the bearing holder 39, and the supporter protrudes from the inner periphery surface of the through hole 39c in the radial direction. The rotation detector 41 includes a pair of detector heads 41a, 41a attached to the supporter at predetermined position, and a detector ring 41b attached to an end of the shaft 38b farthest from the spindle unit 20 at a position facing the inner side of the detector heads 41a, 41a. The rotation detector in the present invention is not limited to this configuration, and may be of other known types.

A detection signal detected by the rotation detector 41 that indicates the angular position of the spindle unit 20 is sent to a control apparatus (not shown) of a machine tool in which the machining head 10 according to the present invention is installed. The detection signal is used for rotation control (numerical control) of the spindle unit 20.

The second support head component 50 in the machining head 10 will be described in detail below.

As mentioned above, in addition to the first support head component 30, the machining head 10 in the present embodiment is equipped with the second support head component 50 that supports the first support head component 30. The first support head component 30 is supported by, for example, the above-described ram of the machine tool through the second support head component 50. The second support head component 50 is provided for rotating the first support head component 30 around an axis line (axis line parallel to the Z axis of the machine tool, referred to as a C axis hereinafter) extending in the vertical direction (Fig. 3).

The second support head component 50 includes a housing 51 as a main body. The housing 51 has a through hole 51a that extends in the C-axis direction. The second support head component 50 also includes a rotary shaft 52 whose shaft member 52a is disposed within the through hole 51a. The first support head component 30 is combined with the second support head component 50 through the rotary shaft 52. In the example shown in the figure, the second support head component 50 is attached to the ram 8 of the machine tool 1 by means of a plurality of screw members inserted through a flange portion 51b of the second support head component 50.

The second support head component 50 includes a DD motor 53 for rotating the rotary shaft 52, a clamp sleeve 54 for maintaining the rotational position of the rotary shaft 52, and a rotary joint 55 for supplying fluid to the first support head component 30, which are all disposed within the through hole 51a of the housing 51.

The DD motor 53 is constituted by a stator 53a fixed to the housing 51 through a stator sleeve 53c, and a rotor 53b fixed to the rotary shaft 52 at a position facing an inner periphery surface of the stator 53a. An exciting current for driving the DD motor 53 is supplied by means of a cable 17 connected to the DD motor 53 through a connector 17a.

The rotary shaft 52 includes the shaft member 52a disposed rotatably within the through hole 51a of the housing 51, and a flange member 52b attached to an end of the shaft member 52a proximate to the first support head component 30 and extending outward radially in directions perpendicular to the C axis. The rotary shaft 52 has a through hole 52c through which the rotary joint 55 extends.

In the example shown in the figure, the shaft member 52a and the flange member 52b of the rotary shaft 52 have a bearing housing 52d therebetween. The bearing housing 52d and the housing 51 have a bearing 56 interposed therebetween. With the bearing 56, the rotary shaft 52 is supported in a rotatable fashion with respect to the housing 51. The bearing 56 in the figure is a triple cylindrical roller bearing (triple roller bearing / axial-radial roller bearing), which is a type of compound-roller pivot bearing, and is capable of receiving large amounts of load in the axial and radial directions.

The rotor 53b of the DD motor 53 is fitted around an outer periphery surface of the shaft member 52a. Thus, when the rotor 53b rotates, the shaft member 52a is rotated about the C axis. The flange member 52b is joined to the shaft member 52a by means of a plurality of screw members 52e arranged in the circumferential direction and thus rotates together with the shaft member 52a. Furthermore, the flange member 52b has a plurality of screw members 19 screwed thereto in the circumferential direction. With the screw members 19, the support segment 30c of the first support head component 30 is joined to the flange member 52b. Accordingly, when the DD motor 53 rotates the rotary shaft 52, the first support head component 30 is rotated together with the rotary shaft 52.

The rotary joint 55 is similar to the rotary joints 37, 38 provided in the first support head component 30, and includes a distributor 55a fixed to the housing 51 and a shaft 55b rotatably fitted within a through hole 55a1 provided in the distributor 55a. Specifically, the shaft 55b is disposed concentrically with the distributor 55a with respect to the C axis.

The distributor 55a is constituted by a cylindrical portion 55a2 disposed within the through hole 52c of the rotary shaft 52 and a flange portion 55a3 extending outward radially from an end of the cylindrical portion 55a2 farthest from the first support head component 30. The flange portion 55a3 of the distributor 55a is joined to the housing 51 by means of a plurality of screw members arranged in the circumferential direction.

On the other hand, an end of the shaft 55b proximate to the first support head component 30 is joined to a disc-shaped flange member 57. The shaft 55b is joined to the flange member 52b of the rotary shaft 52 through the flange member 57. Consequently, the shaft 55b rotates together with the rotary shaft 52. The flange member 57 has a shape that can be fitted to a circular recess 30c1 provided in the support segment 30c of the first support head component 30. With the flange member 57 and the recess 30c1 of the support segment 30c, the first support head component 30 and the second support head component 50 can be properly positioned with respect to each other when the two are combined.

The distributor 55a has a plurality of fluid channels 55a4 arranged at different positions in the circumferential direction. The fluid channels 55a4 are provided for taking in fluid from the outside. On the other hand, the shaft 55b also has a plurality of fluid channels 55b1 that correspond to the fluid channels 55a4 of the distributor 55a.
Similarly, the fluid channels 55b1 are arranged at different positions in the circumferential direction.

The fluid channels 55a4 and the fluid channels 55b1 corresponding thereto communicate with each other through annular grooves extending around an engagement surface between the distributor 55a and the shaft 55b. This communication state is maintained even upon rotation of the shaft 55b. Furthermore, the fluid channels 55b1 in the shaft 55b communicate with the corresponding fluid channels 37a3 or 38a3 provided in the distributor 37a or 38a of the rotary joint 37 or 38 in the first support head component 30. Accordingly, fluid supplied to the distributor 55a of the rotary joint 55 from the outside is sent to the rotary joints 37, 38 of the first support head component 30 via the shaft 55b.

The distributor 55a fixed to the housing 51 and the shaft member 52a of the rotary shaft 52 have the clamp sleeve 54 disposed therebetween for maintaining the rotational position of the rotary shaft 52. The clamp sleeve 54 has a flange portion 54a at which the clamp sleeve 54 is joined to the distributor 55a by means of a plurality of screw members, and is relatively rotatable with the rotary shaft 52. The clamp sleeve 54 has a cylindrical portion 54b provided with an annular groove 54c which is open towards the cylindrical portion 55a2 of the distributor 55a. The annular groove 54c and the outer periphery surface of the cylindrical portion 55a2 of the distributor 55a form a pressure chamber.

When pressure fluid is supplied to the pressure chamber through a fluid channel 54d provided in the distributor 55a, a thin-walled section of the cylindrical portion 54b, which corresponds to the annular groove 54c of the cylindrical portion 54b, becomes deformed outward in the radial direction of the cylindrical portion 54b. As a result, a clamping force acts on the rotary shaft 52 in the radially-outward direction, whereby a state (clamped state) is attained in which the rotary shaft 52 is prevented from rotating.

An upper end portion of the rotary joint 55 is provided with a rotation detector 44 for detecting the amount of rotation of the rotary shaft 52, namely, the amount of rotation of the first support head component 30. The rotation detector 44 includes a pair of detector heads 44a, 44a disposed at predetermined positions on the distributor 55a, and a detector ring 44b which is attached to the shaft 55b rotatable together with the rotary shaft 52 and is disposed facing the detector heads 44a, 44a. Similar to the rotation detector 41 in the first support head component 30, a detection signal of the rotation detector 44 is sent to the control apparatus of the machine tool and is used for rotation control of the first support head component 30.

In the machining head 10 having the above-described configuration, the support head component (first support head component 30) holds the spindle unit 20 between the two support shafts of the pair of leg segments 30a, 30b so as to securely support the spindle unit 20 in a relatively non-rotatable fashion with respect to the two support shafts. Using the DD motor 33 to rotate the driving support shaft of the leg segment 30a, the spindle unit 20 is rotated about the rotary axis line of the support shafts (i.e. axis line or A axis extending perpendicular to the rotary axis line of the spindle 21) to a desired angular position.

The DD motor 33 is driven in accordance with numerical control based on a preliminarily set program. With rotation control of the rotor 33a, the angular position of the spindle unit 20 is controlled via the driving support shaft. Consequently, the DD motor 33 and the driving support shaft (i.e. the rotary shaft 32 and the shaft 37b) linked with the DD motor 33 within the leg segment 30a function as the index mechanism for the spindle unit 20. An exciting current for driving the DD motor 33 is supplied by means of a cable 16 connected to the DD motor 33 through a connector 16a.

In the first support head component 30 according to the present invention, the support shafts in the leg segments 30a and 30b are combined with the respective bearing members through the bearings 45 and 46 such that relative free movement in the A-axis direction between the support shafts and the bearing members is prohibited. On the other hand, by releasing the fixed state between the support shafts and the spindle unit 20 and the fixed state between the support shafts and the respective housings 31a, 31b of the bearing members, the support shafts become movable in the A-axis direction together with the bearing members. This structure will now be described in detail.

In the leg segment 30a (first support segment), as described above, the driving support shaft (the shaft 37b of the rotary joint 37 and the rotary shaft 32) is combined with the housing part 35, which is the bearing member, through the bearing 45, and is prohibited from moving freely in the A-axis direction with respect to the housing part 35. In other words, the driving support shaft and the housing part 35 are combined together (namely, combined into a single unit) in an integrally movable manner while their positional relationship is substantially maintained due to the combined state.

In the state where the driving support shaft and the cylindrical portion 35b of the housing part 35 are disposed within the through hole 31a1 in the housing 31a, the driving support shaft and the housing part 35, which are combined together (combined into a single unit), are combined with the housing 31a at the base section 35a of the housing part 35. Specifically, the end surface of the base section 35a proximate to the spindle unit is disposed so as to face the side surface of the housing 31a farthest from the spindle unit. In this state, the flat base section 35a of the housing part 35 is attached to the housing 31a by means of the plurality of screw members 35a1 inserted from the side of the base section 35a farthest from the spindle unit in the A-axis direction. Therefore, in a state where the side-surface cover 18a is removed, the base section 35a of the housing part 35 is located in the leg segment 30a at a position farthest from the spindle unit within the range thereof in the A-axis direction.

In addition, with regard to the driving support shaft and the cylindrical portion 35b of the housing part 35 disposed within the through hole 31a1, the housing 31a does not have any section in the through hole 31a1 thereof that interferes with the movement of the driving support shaft and the cylindrical portion 35b away from the spindle unit in the A-axis direction. More specifically, in a state where the driving support shaft and the cylindrical portion 35b are disposed within the through hole 31a1, there are no sections that protrude more radially inward beyond the outer periphery surfaces of the driving support shaft and the cylindrical portion 35b at a position farther from the spindle unit than the driving support shaft and the cylindrical portion 35b. In other words, the inner diameter of the through hole 31a1 is larger than the diameter of the outer periphery surfaces of the driving support shaft and the cylindrical portion 35b at a position farther from the spindle unit than the driving support shaft and the cylindrical portion 35b. Consequently, the driving support shaft and the cylindrical portion 35b receive no interference from the housing 31a when being moved away from the spindle unit in the A-axis direction from the state where they are disposed within the through hole 31a1.

Accordingly, when the driving support shaft is to be slid in the A-axis direction in order to detach the spindle unit 20 for, for example, maintenance purposes, first, the screw members 14 are unscrewed to release the fixed state between the driving support shaft and the spindle unit 20, and the screw members 35a1 are unscrewed to release the fixed state between the housing 31a and the housing part 35. This allows the driving support shaft and the housing part 35 (bearing member) to be integrally movable away from the spindle unit in the A-axis direction from the state where they are disposed within the housing 31a (from the state shown in Fig. 1). Accordingly, when the operator moves the housing part 35 in the A-axis direction, the driving support shaft is moved (slid) together with the housing part 35 in the A-axis direction, whereby the spindle unit 20 and the driving support shaft become released from the state where they are engaged with each other by the projection 32b1 and the depression 28a.

In addition, in the leg segment 30b (second support segment), the driven support shaft (the shaft 38b of the rotary joint 38 and the brake member 36) is combined with the bearing holder 39, which is the bearing member, through the bearing 46, and is prohibited from moving freely in the A-axis direction with respect to the bearing holder 39. In other words, the driven support shaft and the bearing holder 39 are combined together (namely, combined into a single unit) in an integrally movable manner while their positional relationship is substantially maintained due to the combined state.

In the state where the driven support shaft and the cylindrical portion 39a of the bearing holder 39 are disposed within the through hole 31b1 in the housing 31b, the driven support shaft and the bearing holder 39, which are combined together (combined into a single unit), are combined with the housing 31b at the flange portion 39b of the bearing holder 39. Specifically, the end surface of the flange portion 39b proximate to the spindle unit is disposed so as to face the side surface of the housing 31b farthest from the spindle unit. In this state, the flange portion 39b of the bearing holder 39 is attached to the flange portion 34a3 of the clamp sleeve 34a, which is attached to the housing 31b, at a side surface of the flange portion 39b farthest from the spindle unit by means of the screw members 39d inserted from the side of the flange portion 39b farthest from the spindle unit in the A-axis direction. Therefore, in a state where the side-surface cover 18b is removed, the flange portion 39b of the bearing holder 39 is located in the leg segment 30b at a position farthest from the spindle unit within the range thereof in the A-axis direction.

In addition, with regard to the driven support shaft and the cylindrical portion 39a of the bearing holder 39 disposed within the through hole 31b1, the brake member 36 is fixed to the flange member 38b2 of the shaft 38b of the rotary joint 38 in the driven support shaft, and the cylindrical portion 39a of the bearing holder 39 is surrounded by the brake member 36. In other words, in the through hole 31b1, the cylindrical portion 39a of the bearing holder 39, which is the bearing member, is disposed inside the driven support shaft in the radial direction. In addition, the brake member 36 defining the outer periphery of the driven support shaft is rotatably disposed within the cylindrical portion 34a2 of the clamp sleeve 34a which is fixed to the housing 31b, and is not prohibited from moving in the A-axis direction by the housing 31b and the clamp sleeve 34a. In other words, the diameter of the through holes in the housing 31b and the clamp sleeve 34a in which the brake member 36 is fitted is larger than the diameter of the brake member 36, and no sections that interfere with the movement of the brake member 36 in the A-axis direction is provided in the through holes.

Therefore, also in the leg segment 30b, the driven support shaft and the cylindrical portion 39a receive no interference from the housing 31b when being moved away from the spindle unit in the A-axis direction from the state where they are disposed within the through hole 31b1. Consequently, by releasing the fixed state between the driven support shaft and the spindle unit 20 due to the screw members 15 and the fixed state between the bearing holder 39 and the housing 31b (clamp sleeve 34a), the driven support shaft and the bearing holder 39 (bearing member) can be made integrally movable away from the spindle unit in the A-axis direction without being interfered by the housing 31b from the state where they are disposed within the housing 31b.

Thus, according to the above-described support head component (first support head component 30) of the present invention, in the process of sliding the support shafts in the A-axis direction for attaching or detaching the spindle unit 20, the state in which the support shafts are slidable in the A-axis direction can be obtained simply by releasing the fixed state between the spindle unit 20 and the support shafts and the fixed state between the bearing members and the housings. In addition, the process of moving the support shafts can be performed using the bearing members having parts located at positions farthest from the spindle unit in the respective support segments. Therefore, compared to the structure of the related art, the process is significantly facilitated.

The bearing members (the housing part 35 and the bearing holder 39) are combined with the respective housings 31a, 31b with the screw members (35a1, 39d) inserted from the end surfaces farthest from the spindle unit in the A-axis direction. The screw members are exposed at the side surfaces of the housings when the covers 18a, 18b are removed. Therefore, the process of releasing the fixed state between the bearing members and the housings can be easily performed from the outside of the housings. In addition, the screw members 14, 15 provided for securing the spindle unit 20 to the support shafts are manipulatable from the outside through the through holes (35c, 39c) formed in the bearing members and the holes formed in the components disposed in the through holes, and therefore the process of releasing the fixed state between the spindle unit 20 and the support shafts can also be easily performed from the outside.

In addition, in the structure shown in the figures, as described above, the support shafts and the bearing members are combined together (combined into a single unit) in an integrally movable manner. In addition, other elements included in the support segments can also be combined together with the support shafts and the bearing members into units.

More specifically, in the leg segment 30a, the cylindrical portion 37a1 of the distributor 37a of the rotary joint 37 is disposed within the through hole 35c in the housing part 35. In this state, the distributor 37a is attached to the housing part 35 by means of the screw members 37c. Thus, the distributor 37a is combined together with the housing part 35. In other words, the rotary joint 37 is also combined into a single unit with the housing part 35 and the rotary shaft 32.

In addition, in the DD motor 33 which rotationally drives the driving support shaft, the rotor 33a is fixed to the driving support shaft (rotary shaft 32). On the other hand, the stator sleeve 33c having the stator 33b, which surrounds the rotor 33a, fitted therein is fixed to the base section 35a of the housing part 35 but is not fixed to the housing 31a. In other words, in the example shown in the figures, the DD motor 33 is also combined into a single unit with the driving support shaft and the housing part 35.

In addition, among the elements combined into a single unit, the stator sleeve 33c located at the most external position is fitted into the through hole 31a1 of the housing 31a in the A-axis direction towards the spindle unit 20 through an opening provided at a side farthest from the spindle unit. Specifically, from the state where the stator sleeve 33c is disposed within the housing 31a, the stator sleeve 33c is movable away from the spindle unit in the A-axis direction without being interfered by the housing 31a, and is prohibited from moving away from the spindle unit in the A-axis direction only by the housing part 35.

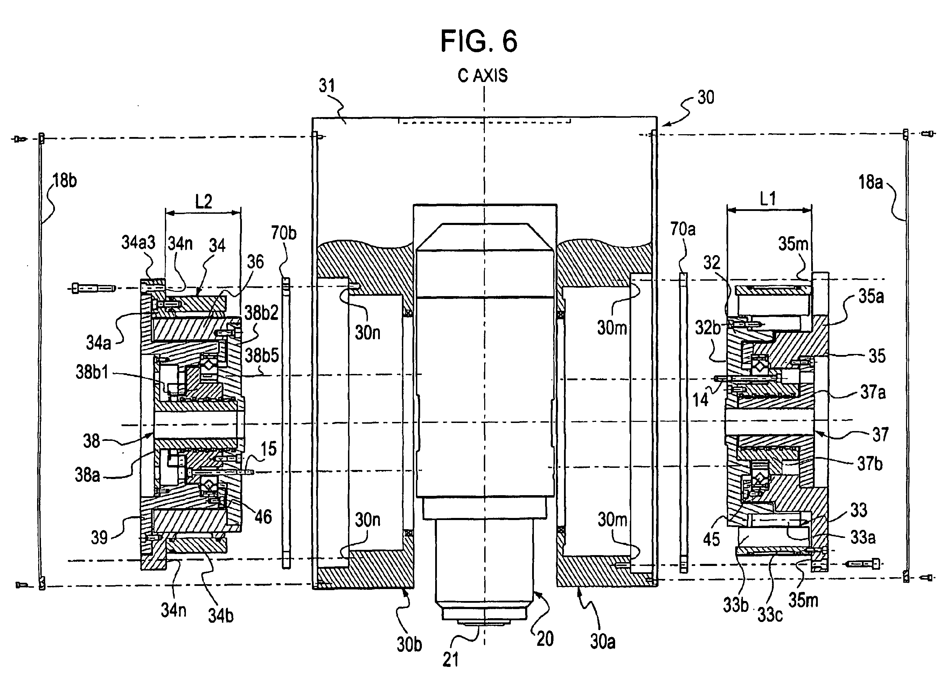

Accordingly, the stator sleeve 33c and the elements (the housing part 35, the rotary joint 37, the rotary shaft 32, and the DD motor 33) which are disposed inside the stator sleeve 33c in the radial direction within the housing 31a can be detached through the through hole 31a1 while their relative positional relationships are substantially maintained, that is, while they are combined into a single unit. In addition, the combined single unit can be reinserted into the through hole 31a of the housing 31a so as to be reattached thereto. Fig. 6 shows the state in which the above-mentioned elements are removed from the leg segment 30a in a state such that they are combined into a single unit.

As described above, the bearing 45 is disposed within the DD motor 33 in the radial direction thereof and within the range occupied by the DD motor 33 in the A-axis direction. Generally, when the bearing 45 is disposed within the DD motor 33 in the radial direction instead of being arranged next to the DD motor 33 on an outer periphery surface of a rotary shaft around which the DD motor 33 is fitted, it is natural that the support shaft have a shaft portion around which the bearing 45 is fitted and an outer peripheral portion around which the DD motor 33 is fitted, the outer peripheral portion being located more outward in the radial direction than the shaft portion. In addition, it is essential that the housing 31a or each of elements attached thereto be located between the outer periphery of the DD motor 33 and the bearing 45, and between the outer peripheral portion of the support shaft and the bearing 45. Generally, when a bearing is disposed within a range occupied by a DD motor in the A-axis direction, the housing will have a complex internal configuration where rotary portions and stationary portions are densely assembled together in the A-axis direction. In contrast, according to the present invention, the stationary portions contained within the through hole 31a of the housing 31a are all independent elements from the housing 31a, and are fixed to the side surface of the housing 31a farthest from the spindle unit 20. Therefore, even if the housing 31a has a complex internal configuration where the rotary portions and stationary portions are densely assembled together in the A-axis direction as mentioned above, the elements contained in the housing 31a can be combined into a single unit so that these elements are made movable integrally in the A-axis direction.

On the other hand, in the leg segment 30b, the cylindrical portion 38a1 of the distributor 38a of the rotary joint 38 is disposed within the through hole 39c. In this state, the flange portion 38a2 of the distributor 38a is attached to the bearing holder 39. Thus, the distributor 38a is also combined together with the driven support shaft and the bearing holder 39. In other words, the rotary joint 38 is also combined into a single unit with the brake member 36 and the bearing holder 39.

In the through hole 31b1, the clamp sleeve 34a of the clamp mechanism 34 (i.e. the clamp sleeve 34a and the pressure-receiving member 34b) interposed between the housing 31b and the driven support shaft (brake member 36) is attached to the side surface of the housing 31b farthest from the spindle unit by means of the plurality of screw members 34a5 inserted through the flange portion 34a3 of the clamp sleeve 34a. In addition, the pressure-receiving member 34b surrounding the cylindrical portion 34a2 of the clamp sleeve 34a is attached to the flange portion 34a3 of the clamp sleeve 34a. The pressure-receiving member 34b is fitted into the through hole 31b1 of the housing 31b in the A-axis direction through an opening provided at a side farthest from the spindle unit 20, and is movable away from the spindle unit in the A-axis direction without being interfered by the housing 31b from the state where the pressure-receiving member 34b is disposed within the through hole 31b1.

Accordingly, in a state where the screw members 34a5 are unscrewed, the movement of the clamp mechanism 34 in the A-axis direction within the housing 31b is regulated solely by the bearing holder 39. Thus, when fixed to the bearing holder 39 with the screw members 39d, the clamp mechanism 34 is integrally movable with the rotary joint 38, the brake member 36, and the bearing holder 39. In other words, by unscrewing the screw members 34a5, instead of the screw members 39d, to release the fixed state between the clamp mechanism 34 and the housing 31b, the combined single unit of the clamp mechanism 34 in addition to the rotary joint 38, the brake member 36, and the bearing holder 39 can be made integrally movable in the A-axis direction from the state where they are disposed within the housing 31b. In this case, the clamp sleeve 34a directly attached to the housing 31b defines part of the bearing member according to the present invention.

Accordingly, in each of the leg segments 30a, 30b of the support head component in the example shown in the figure, the bearing member and the support shaft are combined in an integrally movable manner while their positional relationship is substantially maintained due to the combined state. Moreover, in each of the housings 31a, 31b, the non-rotatable elements (the distributors 37a, 38a, the stator 33b, etc.) are combined with the bearing member, whereas the rotatable elements (the rotary shaft 32, the shafts 37b, 38b, etc.) are combined with the support shaft (or are defined as part of the support shaft). These combined elements including the support shaft and the bearing member are disposed within the through hole 31a1 or 31b1 of the housing 31a or 31b.

Furthermore, the combined unit constituted by these elements is fixed to the housing 31a or 31b only through a section (the base section 35a of the housing part 35 / the flange portion 39b of the bearing holder 39 or the flange portion 34a3 of the clamp sleeve 34a) positioned closest to the side surface of the housing 31a or 31b (farthest from the spindle unit) in the A-axis direction. The housings 31a, 31b do not have sections that prohibit the movement of the combined units away from the spindle unit 20 in the A-axis direction within the through holes 31a1, 31b1. In other words, the housings 31a, 31b do not have sections that protrude more radially inward from the outermost side surfaces, in the radial direction, of portions of the combined units located within the through holes 31a1, 31b1.

Accordingly, the combined units are prohibited from moving away from the spindle unit in the A-axis direction by being fixed to the housings 31a, 31b only with screw members at the corresponding bearing members. Therefore, by simply releasing that fixed state, the prohibition of the movement of the units by the housings 31a, 31b can be cancelled. Thus, by releasing the fixed state between the bearing members and the housings 31a, 31b and the fixed state between the support shafts and the spindle unit 20, the bearing members, the support shafts, and the elements combined with the bearing members and the support shafts can be made integrally movable and detachable from the housings 31a, 31b at opposite sides of the spindle unit 20 in the A-axis direction. When these elements are to be reattached to the housings 31a, 31b, the elements in the combined state are inserted into the corresponding through holes 31a1, 31b1. The bearing members are then fixed to the housings 31a, 31b with the screw members 35a1 and the screw members 38c (34a5), respectively. Subsequently, the support shafts are simply fixed to the spindle unit 20 with the screw members 14 and the screw members 15.

According to the above-described structure, the process for detaching the elements contained in the corresponding housings 31a, 31b for, for example, adjustment purposes can be readily implemented. In addition, since the process for disassembling and assembling the elements for adjustment or other purposes can be performed outside the machine tool, the process can facilitated and the elements can be assembled with high accuracy. In addition, when the elements are to be reattached to the housings 31a, 31b, adjustments of the positional relationships among these elements (combined state) are not necessary since the positional relationships among the elements are maintained due to their combined state. This contributes to enhanced workability.

In the above description, the housings 31a, 31b constituting the support segments (leg segments 30a, 30b) are described as components different from the housing constituting the support segment 30c. However, the housings constituting the support head components according to the present invention may have a three-body structure in which the housings constituting the support segment 30c and the leg segments 30a, 30b are formed separately from each other or a single body structure in which the housings are formed integrally with each other as a single housing 31 as shown in Fig. 6. In particular, in the case where an integrally formed housing is used, a higher rigidity can be obtained compared to the case in which housings formed in the three-body structure are used. Therefore, the support rigidity of the spindle unit 20 can be increased.

Referring to Fig. 6, a case where the elements of each support segment are combined together into a single unit will be described. When the combined units are attached to the housing, spacer members 70a, 70b shown in the figure may be placed between the housing 31 and the combined units. In other words, when the combined units are attached to the housing 31 with the bearing members, the spacer members 70a, 70b may be provided between the housing and the bearing members of the combined units. The spacer members 70a, 70b are provided to align the rotary axis line of the spindle unit 20 (spindle 21) to the central axis (C axis) of the support head component 30. If the rotary axis line of the spindle unit 20 is not accurately aligned with the C axis, the machining accuracy will be reduced. Therefore, it is necessary to accurately align the rotary axis line with the C axis, and the spacer members 70a, 70b are used for this purpose. The structure will now be described in detail.

The spindle unit 20 is supported by the support shafts between the leg segments 30a, 30b. The position of the spindle unit 20 along the A axis direction is determined by dimensions L1 and L2 between the attachment surfaces at which the bearing members of the combined units are attached to the housing (that is, end surfaces 35m and 34n proximate to the spindle unit of the base section 35a of the housing part 35 and the flange unit 34a3 of the clamp sleeve 34a, respectively) and the end surfaces (32b, 38b5) proximate to the spindle unit of the support shafts. The dimensions L1 and L2 are affected by the attachment accuracy of the elements constituting the combined units. If there is even a slight error in one or both of the combined units when the combined units are combined, the dimension L1 and/or the dimension L2 become different from the intended dimensions due to the error. As a result, the rotary axis line of the spindle unit 20 becomes displaced from the C axis. The dimensions L1 and L2 can be determined by measuring them after the elements are combined together. However, the workability is considerably degraded if the elements are disassembled and reassembled each time the measured dimensions are different from the desired dimensions.

Accordingly, when the combined units are combined with the housing 31, the spacer members 70a, 70b are disposed as shown in the figure and the thicknesses (dimensions along the A axis) of the spacer members 70a, 70b are adjusted to adequate values in accordance with the above-described dimensions L1 and L2, so that the rotary axis line of the spindle units 20 can be aligned with the C axis.

More specifically, the distances from attachment surfaces 30m, 30n at which the combined units are attached to the leg segments 30a, 30b of the housing 31 to the central axis (C axis) of the housing 31 are fixed. Accordingly, the above-described dimensions L1 and L2 of the combined units are measured and the thicknesses of the spacer members 70a, 70b are set such that the sums of the dimensions L1 and L2 and the dimensions from the end surfaces of the spindle unit 20 in the A axis direction to the rotary axis line are equal to the sums of the distances from the attachment surfaces 30m and 30n in the housing 31 to the C axis and the thicknesses of the spacer members 70a, 70b. As a result, the rotary axis line of the spindle unit 20 is aligned with the C axis. The spacer members 70a, 70b may be formed by stacking a plurality of thin plates, and the thicknesses thereof can be adjusted by changing the number of the plates. Alternatively, the spacers 70a, 70b may also be formed of integral bodies, and the thicknesses thereof may be adjusted by, for example, cutting the end faces thereof.

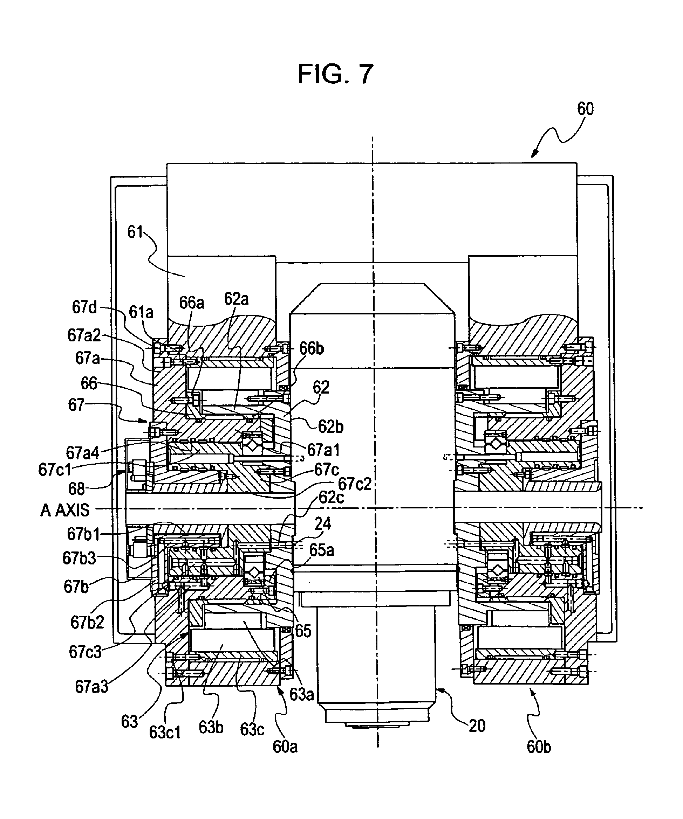

Another embodiment of the present invention will now be described with reference to Fig. 7.

In the support head component (the first support head component 30) of the machining head according to the above-described embodiment of the present invention, only one of the leg segments of a pair for supporting the spindle unit 20 is provided with an index mechanism (DD motor) for rotating the spindle unit 20. In contrast, as shown in Fig. 7, both leg segments of the support head component may be provided with index mechanisms (DD motors), and that the present invention is applied to both index mechanisms.

As mentioned above, in a support head component 60 shown in Fig. 7, a pair of leg segments 60a and 60b supporting the spindle unit 20 is both provided with index mechanisms including DD motors 63. The leg segments 60a and 60b in the figure have basically the same internal configuration. Therefore, the description below will simply be directed to the leg segment 60a, and the description and reference numerals with regard to the leg segment 60b will be omitted.

The leg segment 60a has a housing 61 as a main body. The housing 61 has a through hole 61a that extends in the A-axis direction. The through hole 61a has disposed therein, for example, a DD motor 63, a support shaft (driving support shaft) that supports the spindle unit 20, a bearing 65 for rotatably supporting the support shaft, and a rotary joint 67. The leg segment 60a is also provided with a rotation detector 68, which is similar to that provided in the above-described embodiment. The rotation detector 68 is provided only in the leg segment 60a.

In the example shown in the figure, the rotary joint 67 has a distributor that is constituted by two members 67a and 67b (i.e. first and second distributors). The first distributor 67a has a flange portion 67a2 at which the first distributor 67a is joined to the side surface of the housing 61 farthest from the spindle unit 20 by means of a plurality of screw members 67d arranged in the circumferential direction. The first distributor 67a also has a through hole 67a4 extending in the A-axis direction. In a state where the second distributor 67b extends through this through hole 67a4, a flange portion 67b2 of the second distributor 67b is joined to the first distributor 67a. Thus, the first and second first distributors 67a and 67b are secured to the housing 61.

The rotary joint 67 has a shaft 67c, which is constituted by a large-diameter section 67c1 rotatably fitted between a cylindrical portion 67a1 of the first distributor 67a and a cylindrical portion 67b1 of the second distributor 67b, and by a shaft section 67c2 around which the bearing 65 is fitted.

In the rotary joint 67, the first and second distributors 67a and 67b are respectively provided with a plurality of fluid channels 67a3 and 67b3. The shaft 67c is provided with a plurality of fluid channels 67c3 in correspondence with the fluid channels 67a3 and 67b3. The fluid channels 67a3 and 67b3 communicate with the fluid channels 67c3 through annular grooves extending around engagement surfaces among the cylindrical portions 67a1 and 67b1 of the respective first and second distributors 67a and 67b and the large-diameter section 67c1 of the shaft 67c.

A rotary shaft 62 provided rotatably with respect to the housing 61 is joined to an end surface of the shaft section 67c2 of the shaft 67c proximate to the spindle unit 20. In a state where the rotary shaft 62 is attached to the shaft 67c, a cylindrical portion 62a of the rotary shaft 62 surrounds the cylindrical portion 67a1 of the first distributor 67a included in the rotary joint 67. The rotary shaft 62 also has a plurality of fluid channels 62c that communicate with the plurality of fluid channels 67c3 provided in the shaft 67c of the rotary joint 67. Each of the fluid channels 67c3 in the shaft 67c communicates with the corresponding port 24 of the spindle unit 20 through the corresponding fluid channel 62c.

As shown in the figure, the cylindrical portion 67a1 of the first distributor 67a and the shaft section 67c2 of the shaft 67c in the rotary joint 67 have the bearing 65 interposed therebetween. With the bearing 65, the shaft 67c is supported in a rotatable fashion within the housing 61. The rotary shaft 62 attached to the shaft 67c has an end surface 62b that is proximate to the leg segment 60b. The end surface 62b has the spindle unit 20 attached thereto. Accordingly, the shaft 67c of the rotary joint 67 and the rotary shaft 62 are provided in a rotatable fashion within the housing 60 and define a support shaft for supporting the spindle unit 20. On the other hand, the first distributor 67a is fixed to the housing 60 and defines a bearing member that rotatably supports the corresponding support shaft through the bearing 65. Because the second distributor 67b is fixed to and combined with the first distributor 67a, the second distributor 67b also defines part of the bearing member.

The inner ring of the bearing 65 is fitted around the outer periphery surface of the shaft section 67c2 of the shaft 67c in the rotary joint 67 constituting a part of the support shaft. The inner ring of the bearing 65 is positionally regulated in the A-axis direction by an end surface of the large-diameter section 67c1 of the second distributor 67b proximate to the spindle unit 20 and by the rotary shaft 62 attached to an end surface of the shaft section 67c2 proximate to the spindle unit 20. On the other hand, the outer ring of the bearing 65 is disposed within the through hole 67a4 of the first distributor 67a fixed to the housing 61 and is fitted within a large-diameter section provided at an end of this through hole 67a4 proximate to the spindle unit 20. The outer ring is positionally regulated in the A-axis direction by an end surface of this large-diameter section and by a bearing sleeve 65a attached to an end surface of the first distributor 67a proximate to the spindle unit 20.

Consequently, the bearing 65 is combined with the corresponding support shaft (i.e. the shaft 67c of the rotary joint 67 and the rotary shaft 62) and the first distributor 67a in a state such that the bearing 65 is positionally regulated in the A-axis direction with respect to both the support shaft and the first distributor 67a. In other words, the support shaft and the first distributor 67a (bearing member) are combined with the bearing 65 therebetween, such that free movement among these elements in the A-axis direction is prohibited.

Accordingly, in the example shown in the figure, the support shaft and the bearing member (first distributor 67a and second distributor 67b) are made integrally movable (namely, combined into a single unit) while their positional relationship is substantially maintained due to the combined state. In addition, the housing 61 has no sections in the through hole 61a that interfere with the movement of the bearing member away from the spindle unit 20 in the A-axis direction from the state shown in the figure where the bearing member is disposed within the through hole 61a. Specifically, the support shaft is positionally regulated in the A-axis direction solely by the bearing member (bearing 65) within the through hole 61a of the housing 61. Consequently, by releasing the fixed state with respect to the spindle unit 20 and the housing 61, the support shaft and the bearing member combined with each other can be made integrally movable away from the spindle unit 20 in the A-axis direction without being interfered by the housing 61.

In the example shown in the figure, a clamp sleeve 66 that maintains the angular position of the spindle unit 20 has a cylindrical portion 66b, which is fitted around the outer periphery surface of the cylindrical portion 67a1 of the first distributor 67a. The clamp sleeve 66 also has a flange portion 66a, which is attached to an end surface of the flange portion 67a2 of the first distributor 67a proximate to the spindle unit 20 by means of a plurality of screw members arranged in the circumferential direction. In other words, the clamp sleeve 66 is also combined into a single unit with the support shaft and the bearing member. In the example shown in the figure, the cylindrical portion 67a1 of the first distributor 67a functions as the pressure-receiving member in the first above-described embodiment and constitutes a clamp mechanism together with the clamp sleeve 66 and the first distributor 67a (cylindrical portion 67a1).

The cylindrical portion 66b of the clamp sleeve 66 is disposed between the cylindrical portion 67a1 of the first distributor 67a and the cylindrical portion 62a of the rotary shaft 62. The flange portion 66a of the clamp sleeve 66 is disposed within a range occupied by the rotary shaft 62 in the radial direction thereof. Consequently, when the clamp sleeve 66 is being moved integrally with the support shaft and the bearing member, the clamp sleeve 66 is not interfered by the housing 61.

The DD motor 63 in the example shown in the figure includes a stator 63b fitted within the through hole 61a of the housing 61 with a stator sleeve 63c therebetween, and a rotor 63a fitted around the outer periphery surface of the cylindrical portion 62a of the rotary shaft 62 at a position facing an inner periphery surface of the stator 63a. The stator sleeve 63c is fixed to the flange portion 67a2 of the first distributor 67a by means of a plurality of screw members 63c1 arranged in the circumferential direction thereof. In other words, the DD motor 63 has its stator 63b fixed to the bearing member and has its rotor 63a fixed to the support shaft so as to be combined into a single unit with the bearing member and the support shaft.

In addition, the stator sleeve 63c, which is located at the outermost periphery side of the DD motor 63, is fitted within the through hole 61a, and an end surface of the stator sleeve 63c farthest from the spindle unit 20 is attached to the flange portion 67a2 of the first distributor 67a. Thus, the stator sleeve 63c is not prohibited from moving in the A-axis direction by the housing 61. In other words, without being interfered by the housing 61, the stator sleeve 63c (DD motor 63) is movable integrally with the first distributor 67a in response to movement of the first distributor 67a in the A-axis direction.

Consequently, from the state where the elements (i.e. the rotary joint 67, the rotary shaft 62, the clamp sleeve 66, and the DD motor 63) combined with each other into a single unit are disposed within the housing 61 of the leg segment 60a (60b) in the support head component 60 according to the example shown in the figure, the combined elements can be made integrally movable away from the spindle unit in the A-axis direction while their positional relationships are substantially maintained due to the combined state. The support head component 60 can thus achieve similar advantages to those achieved by the support head component in the above-described embodiment.

In the above embodiments, the support segments (leg segments) in the support head component according to the present invention are each equipped with a rotary joint (37, 38, 67). Alternatively, the aforementioned fluid may be supplied directly to the spindle unit 20 from the outside of each support segment. In that case, the rotary joints may be omitted.

Furthermore, although the elements disposed in each support segment are all combined into a single unit in the above embodiments, the present invention is not limited to this configuration. The present invention permits any configuration in which at least the support shaft, the bearing that rotatably supports the support shaft, and the bearing member in each support segment are combined and are made integrally movable in the A-axis direction. For example, in Fig. 1, the clamp mechanism 34 in the leg segment 30b may be made non-detachable from the side of the leg segment 30b farthest from the spindle unit 20. In that case, only the support shaft, the bearing, and the bearing member (i.e. the rotary joint 38, the rotary shaft 39, and the bearing 46) may be combined into a single unit and made integrally movable in the A-axis direction so that only this unit can be detached from the housing 31b. As a further alternative, in the leg segment 30a, the stator sleeve 33c having the stator 33b fitted therein may be fixed to the housing 31a. Regarding the DD motor 33 in this case, only the rotor 33a is combined with the support shaft into a single unit.

The technical scope of the present invention is not limited to the above embodiments, and modifications are permissible without departing from the scope of the claimed invention as defined in the claims.

## Claims

1. A machining head (10) for a machine tool, comprising a spindle unit (20) including a spindle (21) to which a tool is attachable and a support head component (30, 60) that supports the spindle unit (20),
the support head component (30, 60) including an index mechanism and a clamp mechanism (34), the index mechanism rotating the spindle unit (20) about an axis line (A axis) extending perpendicular to a rotary axis line (C) of the spindle (21) in order to index an angular position of the spindle unit (20), the clamp mechanism (34) maintaining the indexed angular position of the spindle unit (20),
the support head component (30, 60) further includes first and second support segments (30a, 30b, 60a, 60b) containing respective support shafts (37b, 32, 38b, 36, 62, 67c), the support shafts (37b, 32, 38b, 36, 62, 67c) being disposed opposite to each other across the spindle unit (20) such that shaft centers of the support shafts (37b, 32, 38b, 36, 62, 67c) are aligned with the axis line extending perpendicular to the rotary axis line (A) of the spindle (21),
each of the first and second support segments (30a, 30b, 60a, 60b) has a housing (31a, 31b) having a bearing member (34a, 35, 39, 67a, 67b) therein,
the bearing member (34a, 35, 39, 67a, 67b) being fixed to the housing (31a, 31b) and rotatably supporting the corresponding support shaft (37b, 32, 38b, 36, 62, 67c) through a bearing (45, 46, 65),
the index mechanism includes a drive motor (33, 63) as driving means provided in at least one of the first and second support segments (30a, 30b, 60a, 60b), the drive motor (33, 63) including a motor rotor (33a, 63a) and a motor stator (33b, 63b) that surround the corresponding support shaft (37b, 32, 38b, 36, 62, 67c) and is disposed coaxially with the support shaft (37b, 32, 38b, 36, 62, 67c),
the machining head is **characterized in that**
the bearing member (34a, 35, 39, 67a, 67b) has a base section (35a) or a flange portion (37a2, 67a2) and a cylindrical portion (34a2, 35b, 39a, 67a1, 67b1) extending in the axis (A) direction from the base section (35a) or the flange portion (37a2, 67a2),
the bearing member (34a, 35, 39, 67a, 67b) being assembled to the housing by a plurality of screw members screwed into the bearing member (34a, 35, 39, 67a, 67b) in the axis (A) direction from a side of the base section (35a) or the flange portion (37a2, 67a2),
the support shaft (32, 37b, 38b, 36, 62, 67c) and the bearing member (34a, 35, 39, 67a, 67b) are combined together in an integrally movable manner in the axis (A) direction through the bearing (45, 46, 65),
the support shaft (32, 37b, 38b, 36, 62, 67c) and the spindle unit (20) are fixed by a plurality of screw members (14, 15),
each housing (31a, 31b, 61) of the first and second support segments (30a, 30b, 60a, 60b) has a through hole (31al, 31bl, 61a) in which the support shaft (32, 37b, 38b, 36, 62, 67c) and cylindrical portions (34a2, 35b, 39a, 67al, 67bl) of the bearing member (34a, 35, 39, 67a, 67b) are arranged, and
the support shaft (37b, 32, 38b, 36, 62, 67c) in each support segment (30a, 30b, 60a, 60b) is supported by the corresponding bearing member (34a, 35, 39, 67a, 67b) in a manner such that the support shaft (37b, 32, 38b) becomes integrally movable together with the bearing member (34a, 35, 39, 67a, 67b) in the axial direction (A) of the support shaft (37b, 32, 38b, 36, 62, 67c) by releasing a fixed state by the screw members (14, 15) between the support shaft (37b, 32, 38b, 36, 62, 67c) and the spindle unit (20) and the fixed state by the screw members between the bearing member (35, 39) and the corresponding housing (31a, 31b).

2. The machining head (10) according to Claim 1,
wherein the motor rotor (33a) of the drive motor (33) is fixed to the corresponding support shaft (37b, 32) and the motor stator (33b) of the drive motor (33) is fixed to the corresponding bearing member (35) such that the drive motor (33) becomes integrally movable with the support shaft (37b, 32) and the bearing member (35) when the fixed states are released.

3. The machining head (10) according to Claim 1,
wherein the clamp mechanism (34) is fixed to the bearing member (39) in at least one of the first and second support segments (30a, 30b) such that the clamp mechanism (34) becomes integrally movable with the corresponding support shaft (38b) and the bearing member (39) when the fixed states are released.

4. The machining head (10) according to any one of Claims 1 to 3, wherein the bearing (45, 46) is disposed within a range occupied by the drive motor (33) in the axial direction of the corresponding support shaft (37b, 32, 38b).

5. The machining head (10) according to any one of Claims 1 to 3,
wherein the bearing member (35, 39) is attached to the housing (31a, 31b) with a spacer member (70a, 70b) provided therebetween.

## Patentansprüche

1. Bearbeitungskopf (10) für eine Werkzeugmaschine umfassend eine Spindel-Einheit (20), die eine Spindel (21) aufweist, an der ein Werkzeug befestigbar ist und ein Lagerkopf-Bauteil (30, 60), das die Spindeleinheit (20) lagert,
wobei das Lagerkopf-Bauteil (30, 60) einen Index-Mechanismus und einen Klemm-Mechanismus (34) umfasst, wobei der Index-Mechanismus die Spindeleinheit (20) um eine Achs-Linie (A-Achse) dreht, die sich senkrecht zu einer Dreh-Achs-Linie (C) der Spindel (21) erstreckt, um eine Winkelposition der Spindeleinheit (20) zu indexieren, wobei der Klemm-Mechanismus (34) die indexierte Winkelposition der Spindeleinheit (20) beibehält,
das Lagerkopf-Bauteil (30, 60) umfasst weiter erste und zweite Lagersegmente (30a, 30b, 60a, 60b), die jeweils Lager-Achsen (37b, 32, 38b, 36, 62, 67c) umfassen, wobei die Lager-Achsen (37b, 32, 38b, 36, 62, 67c) über die Spindeleinheit (20) einander gegenüberliegend angeordnet sind, so dass Achs-Zentren der Lager-Achsen (37b, 32, 38b, 36, 62, 67c) in Übereinstimmung mit der Achse-Linie, die sich senkrecht zu der Drehachs-Linie (A) der Spindel (21) erstreckt, gebracht sind,
jedes der ersten und zweiten Lagersegmente (30a, 30b, 60a, 60b) ein Gehäuse (31a, 31b) umfasst, das ein Lager-Element (34a, 35, 39, 67a, 67b) darin aufweist,
wobei das Lager-Element (34a, 35, 39, 67a, 67b) an das Gehäuse (31a, 31b) fixiert ist und drehbar die korrespondierende Lager-Achse (37b, 32, 38b, 36, 62, 67c) über ein Lager (45, 46, 65) lagert,
der Indexmechanismus einen Antriebsmotor (33, 63) als Antriebsmittel umfasst, das wenigstens an einem der ersten und zweiten Lagersegmente (30a, 30b, 60a, 60b) vorgesehen ist, wobei der Antriebsmotor (33, 63) einen Motor-Rotor (33a, 63a) und einen Motor-Stator (33b, 63b) umfasst, die die korrespondierende Lager-Achse (37b, 32, 38b, 36, 62, 67c) umgeben, und ist koaxial mit der Lager-Achse (37b, 32, 38b, 36, 62, 67c) angeordnet,
der Bearbeitungskopf ist **dadurch gekennzeichnet, dass**
das Lager-Element (34a, 35, 39, 67a, 67b) einen Basis-Bereich (35a) oder einen Flansch-Bereich (37a2, 67a2) umfasst, und einen zylindrischen Bereich (34a2, 35b, 39a, 67al, 67b1), der sich in der Achs-(A)-Richtung von dem Basis-Bereich (35a) oder dem Flansch-Bereich (37a2, 67a2) erstreckt,
wobei das Lager-Element (34a, 35, 39, 67a, 67b) an dem Gehäuse über mehrere Schraub-Elemente montiert ist, die in das Lager-Element (34a, 35, 39, 67a, 67b) in die Achs-(A)-Richtung von einer Seite des Basis-Bereichs (35a) oder des Flansch-Bereichs (37a2, 67a2) hineingeschraubt sind,
die Lager-Achse (32, 37b, 38b, 36, 62, 67c) und das Lager-Element (34a, 35, 39, 67a, 67b) sind zusammen in einer integral bewegbaren Art und Weise in die Achs-(A)-Richtung über das Lager (45, 46, 65) verbunden,
die Lager-Achse (32, 37b, 38b, 36, 62, 67c) und die Spindel-Einheit (20) sind über mehrere Schraub-Elemente (14, 15) fixiert,
jedes Gehäuse (31a, 31b, 61) der ersten und zweiten Lagersegmente (30a, 30b, 60a, 60b) umfasst eine Durchgangsöffnung (31a1, 31b1, 61a), in der die Lager-Achse (32, 37b, 38b, 36, 62, 67c) und zylindrische Bereiche (34a2, 35b, 39a, 67a1, 67b1) des Lager-Elements (34a, 35, 39, 67a, 67b) angeordnet sind, und
die Lager-Achse (37b, 32, 38b, 36, 62, 67c) ist in jedem Lagersegment (30a, 30b, 60a, 60b) über das korrespondierende Lager-Element (34a, 35, 39, 67a, 67b) in einer Art und Weise gelagert, so dass die Lager-Achse (37a, 32, 38b) zusammen mit dem Lagerelement (34a, 35, 39, 67a, 67b) in die axiale Richtung (A) der Lager-Achse (37b, 32, 38b, 36, 62, 67c) über ein Freigeben eines fixierten Zustandes über die Schraub-Elemente (14a, 15) zwischen der Lager-Achse (37b, 32, 38b, 36, 62, 67c) und der Spindel-Einheit (20) und dem fixierten Zustand über die Schraubelemente zwischen dem Lagerelement (35, 39) und dem korrespondierenden Gehäuse (31a, 31 b) integral bewegbar werden.

2. Bearbeitungskopf (10) gemäß Anspruch 1,
bei dem der Motor-Rotor (33a) des Antriebsmotors (33) an die korrespondierende Lager-Achse (37b, 32) fixiert ist, und der Motor-Stator (33b) des Antriebsmotors (33) an dem korrespondierenden Lager-Element (35) fixiert ist, so dass der Antriebs-Motor (33) mit der Lager-Achse (37b, 32) und dem Lager-Element (35) integral bewegbar wird, wenn die fixierten Zustände freigegeben sind.

3. Bearbeitungskopf (10) gemäß Anspruch 1,
bei dem der Klemm-Mechanismus (34) an dem Lager-Element (39) an wenigstens einem von dem ersten und zweiten Lagersegmenten (30a, 30b) derart fixiert ist, so dass der Klemm-Mechanismus (34) mit der korrespondierenden Lager-Achse (38b) und dem Lager-Element (39) integral bewegbar wird, wenn die fixierten Zustände freigegeben sind.

4. Bearbeitungskopf (10) gemäß einem der Ansprüche 1 bis 3, bei dem das Lager (45, 46) innerhalb eines Bereiches angeordnet ist, der über den Antriebs-Motor (33) in der axialen Richtung der korrespondierenden Lager-Achse (37b, 32, 38b) belegt ist.

5. Bearbeitungskopf (10) gemäß einem der Ansprüche 1 bis 3,
bei dem das Lager-Element (35, 39) an dem Gehäuse mit einem Abstands-Element (70a, 70b) befestigt ist, das dazwischen vorgesehen ist.

## Revendications

1. Tête d'usinage (10) pour une machine-outil, comprenant une unité de broche (20) englobant une broche (21) à laquelle on peut fixer un outil et un composant de tête de support (30, 60) qui supporte l'unité de broche (20),
le composant de tête de support (30, 60) englobant un mécanisme d'indexage et un mécanisme de serrage (34), le mécanisme d'indexage faisant tourner l'unité de broche (20) autour d'une ligne axiale (axe A) s'étendant perpendiculairement à une ligne axiale rotative (C) de la broche (21) dans le but d'indexer une position angulaire de l'unité de broche (20), le mécanisme de serrage (34) maintenant la position angulaire indexée de l'unité de broche (20),
le composant de tête de support (30, 60) englobant en outre des premier et deuxième segments de support (30a, 30b, 60a, 60b) contenant des arbres de support respectifs (37b, 32, 38b, 36, 62, 67c), les arbres de support (37b, 32, 38b, 36, 62, 67c) étant disposés à l'opposé les uns des autres à travers l'unité de broche (20) de telle sorte que les centres des arbres de support (37b, 32, 38b, 36, 62, 67c) sont disposés en alignement avec la ligne axiale s'étendant perpendiculairement à la ligne axiale rotative (A) de la broche (21),
chacun desdits premier et deuxième segments de support (30a, 30b, 60a, 60b) possédant un logement (31a, 31b) à l'intérieur duquel vient se disposer un membre (34a, 35, 39, 67a, 67b) faisant office de palier,
le membre (34a, 35, 39, 67a, 67b) faisant office de palier étant fixé au logement (31a, 31b) et supportant en rotation l'arbre de support correspondant (37b, 32, 38b, 36, 62, 67c) via un palier (45, 46, 65),
le mécanisme d'indexage englobant un moteur d'entraînement (33, 63) à titre de moyen d'entraînement prévu dans au moins un desdits premier et deuxième segments de support (30a, 30b, 60a, 60b), le moteur d'entraînement (33, 63) englobant un rotor de moteur (33a, 63a) et un stator de moteur (33b, 63b) qui entoure l'arbre de support correspondant (37b, 32, 38b, 36, 62, 67c) et qui est disposé en position coaxiale avec l'arbre de support (37b, 32, 38b, 36, 62, 67c),
la tête d'usinage étant **caractérisée en ce que**
le membre (34a, 35, 39, 67a, 67b) faisant office de palier possède une section de base (35a) ou une portion en forme de bride (37a2, 67a2) et une portion cylindrique (34a2, 35b, 39a, 67a1, 67b1) s'étendant dans la direction de l'axe (A) à partir de la section de base (35a) ou à partir de la portion en forme de bride (37a2, 67a2),
le membre (34a, 35, 39, 67a, 67b) faisant office de palier est monté sur le logement via plusieurs membres filetés qui sont vissés dans le membre (34a, 35, 39, 67a, 67b) faisant office de palier dans la direction de l'axe (A) à partir d'un côté de la section de base (35a) ou de la portion en forme de bride (37a2, 67a2),
l'arbre de support (37b, 32, 38b, 36, 62, 67c) et le membre (34a, 35, 39, 67a, 67b) faisant office de palier sont combinés l'un à l'autre de façon à se déplacer à l'unisson dans la direction de l'axe (A) via le palier (45, 46, 65),
l'arbre de support (37b, 32, 38b, 36, 62, 67c) et l'unité de broche (21) sont fixés par plusieurs membres filetés (14, 15),
chaque logement (31a, 31b, 61) desdits premier et deuxième segments de support (30a, 30b, 60a, 60b) possède un trou de passage (31a1, 31b1, 61a) dans lequel sont montés l'arbre de support (37b, 32, 38b, 36, 62, 67c) et les portions cylindriques (34a2, 35b, 39a, 67a1, 67b1) du membre (34a, 35, 39, 67a, 67b) faisant office de palier, et
l'arbre de support (37b, 32, 38b, 36, 62, 67c) dans chaque segment de support (30a, 30b, 60a, 60b) est supporté par le membre correspondant (34a, 35, 39, 67a, 67b) faisant office de palier d'une manière telle que l'arbre de support (37b, 32, 38b) se déplace à l'unisson avec le membre (34a, 35, 39, 67a, 67b) faisant office de palier dans la direction axiale (A) de l'arbre de support (37b, 32, 38b, 36, 62, 67c) en quittant un état fixe via les membres filetés (14, 15) entre l'arbre de support (37b, 32, 38b, 36, 62, 67c) et l'unité de broche (20) et l'état fixe via les membres filetés entre le membre (35, 39) faisant office de palier et le logement correspondant (31a, 31b).

2. Tête d'usinage (10) selon la revendication 1,
dans laquelle le rotor de moteur (33a) du moteur d'entraînement (33) est fixé à l'arbre de support correspondant (37b, 32) et le stator de moteur (33b) du moteur d'entraînement (33) est fixé au membre correspondant (35) faisant office de palier de telle sorte que le moteur d'entraînement (33) se déplace à l'unisson avec l'arbre de support (37b, 32) et le membre (35) faisant office de palier lorsque les états fixes sont supprimés.

3. Tête d'usinage (10) selon la revendication 1,
dans laquelle le mécanisme de serrage (34) est fixé au membre (39) faisant office de palier dans au moins un desdits premier et deuxième segments de support (30a, 30b) de telle sorte que le mécanisme de serrage (34) se déplace à l'unisson avec l'arbre de support correspondant (38b) et le membre (39) faisant office de palier lorsque les états fixes sont supprimés.

4. Tête d'usinage (10) selon l'une quelconque des revendications 1 à 3, dans laquelle le palier (45, 46) est disposé au sein d'une plage occupée par le moteur d'entraînement (33) dans la direction axiale de l'arbre de support correspondant (37b, 32, 38b).

5. Tête d'usinage (10) selon l'une quelconque des revendications 1 à 3, dans laquelle le membre (35, 39) faisant office de palier est fixé au logement (31a, 31b) avec un membre (70a, 70b) faisant office d'écarteur prévu entre les deux.
